# EUROPEAN PATENT APPLICATION

(11) **EP 4 841 017 A1**
(43) Date of publication of application: **18.11.2026**
(21) Application number: 25911443.7
(22) Date of filing: 05.06.2025
(51) Int. Cl.: D21H 13/38, B01D 46/00, B01D 53/94, D04H 1/10, D04H 1/4209, D04H 1/425, D04H 1/4282, D04H 1/4326, D04H 1/58, D04H 1/64, D04H 3/002, D21H 27/08, F01N 3/28

(54) **PAPER MAT AND PAPER MAT WITH LAMINATED SHEET**

(30) Priority: 26.12.2024 JP 2024230667
(71) Applicant: IBIDEN CO., LTD., Ogaki-shi, Gifu 503-8604 (JP)
(72) Inventor: KOYAMA, Tomomi, Takahama-shi, Aichi 444-1301 (JP); MUSHIKA, Taiga, Takahama-shi, Aichi 444-1301 (JP); OHNO, Masao, Takahama-shi, Aichi 444-1301 (JP); MAEDA, Toshiyuki, Takahama-shi, Aichi 444-1301 (JP); YOSHIKAWA, Yuki, Takahama-shi, Aichi 444-1301 (JP)
(74) Representative: Winter, Brandl - Partnerschaft mbB
(86) International application number: PCT/JP2025/020328
(87) International publication number: WO 2026/140292

(57) **Abstract**

A papermaking mat with high moldability despite having a low organic component content is provided. The papermaking mat of the present invention includes: inorganic fibers; organic fibers; and at least one of an organic binder or an inorganic binder, the papermaking mat having an organic component content of 5% by weight or less.

## Description

### TECHNICAL FIELD

The present invention relates to papermaking mats and laminated sheet-equipped papermaking mats.

### BACKGROUND ART

Exhaust gas discharged from an internal combustion engine such as a diesel engine contains a particulate matter (hereinafter, also referred to as "PM"). Adverse effects of PM on the environment and human bodies have been problems. The exhaust gas also contains harmful gas components such as CO, HC, and NOx, causing concerns about effects of such harmful gas components on the environment and human bodies.

In view of the above, various exhaust gas conversion apparatuses that collect PM in exhaust gas and convert harmful gas components have been proposed. Such an exhaust gas conversion apparatus includes an exhaust gas treatment unit including porous ceramic such as silicon carbide or cordierite, a casing for housing the exhaust gas treatment unit, and a mat material between the exhaust gas treatment unit and the casing. The mat material is disposed mainly, for example, for preventing the exhaust gas treatment unit from being damaged by contact with the casing that covers the periphery of the exhaust gas treatment unit due to vibrations and impacts caused by operation of automobiles or the like, and for preventing exhaust gas leakage from a space between the exhaust gas treatment unit and the casing.

As such a mat material, a papermaking mat formed by papermaking of inorganic fibers is known.

In the papermaking mat, an organic binder is used to improve moldability.

For example, Patent Literature 1 discloses a holding material for an exhaust gas treatment device, wound around a cylindrical exhaust gas treatment body, assembled into a casing together with the exhaust gas treatment body, and provided in a gap between the exhaust gas treatment body and the casing for housing the exhaust gas treatment body. The holding material contains an alumina fiber including 70% by mass or more of alumina components, an organic binder, and an inorganic binder. The holding material is made of a fiber assembly having an inorganic binder content per 100 parts by mass of the alumina fiber of 2 to 8 parts by mass. The holding material has a basis weight of 1800 g/m² or more, and a type-C durometer hardness measured in conformity with JIS K 7312 of 30 to 45. The organic binder content per 100 parts by mass of the alumina fiber is preferably 8 to 12 parts by mass.

### CITATION LIST

### - Patent Literature

Patent Literature 1: JP 2024-103108 A

### SUMMARY OF INVENTION

### - Technical Problem

When the holding material (papermaking mat) for an exhaust gas conversion apparatus described in Patent Literature 1 is disposed in an exhaust gas conversion apparatus and exhaust gas is purified, there has been a problem in that the organic components such as the organic binder are decomposed by the heat of the exhaust gas, thereby generating a large amount of gas. Moreover, with the decomposition of the organic components, there has also been a problem in that the holding force of the holding material for an exhaust gas treatment apparatus decreases.

In order to solve such problems, reduction in the organic component content is conceivable; however, in this case, a problem arises in that the moldability of the holding material (papermaking mat) for an exhaust gas conversion apparatus is reduced.

The present invention is made in view of the above problems and aims to provide a papermaking mat with high moldability despite having a low organic component content.

### - Solution to Problem

As a result of intensive studies, the present inventors have found out that adding organic fibers to a papermaking mat can improve the moldability of the papermaking mat, thereby completing the present invention.

Namely, the papermaking mat of the present invention includes: inorganic fibers; organic fibers; and at least one of an organic binder or an inorganic binder, the papermaking mat having an organic component content of 5% by weight or less.

The papermaking mat of the present invention is to be disposed in an exhaust gas conversion apparatus.

The papermaking mat of the present invention has an organic component content of 5% by weight or less.

Therefore, even when exhaust gas reaches the exhaust gas conversion apparatus and the organic components are decomposed by the heat of the exhaust gas, the amount of gas generated is small. Moreover, since the weight proportion of the organic components in the papermaking mat is low, even when the organic components are decomposed by the heat of the exhaust gas, the holding force of the papermaking mat is less likely to decrease.

The papermaking mat of the present invention includes organic fibers.

In the papermaking mat of the present invention, the organic fibers are entangled with inorganic fibers.

At portions where the inorganic fibers and the organic fibers are entangled, frictional resistance is generated. In addition, since the organic fibers have shape-retaining properties, they are less likely to be displaced. Therefore, the papermaking mat of the present invention has high moldability.

In the papermaking mat of the present invention, the weight proportion of the organic fibers in the papermaking mat is preferably 4.5% by weight or less.

Setting the weight proportion of the organic fibers to 4.5% by weight or less makes the weight proportion of the organic components low.

In the papermaking mat of the present invention, the ratio of the average fiber diameter of the organic fibers to the average fiber diameter of the inorganic fibers ([average fiber diameter of the organic fibers]/[average fiber diameter of the inorganic fibers]) is preferably 0.1 to 1.5.

When the ratio falls within such a range, the inorganic fibers and the organic fibers are more easily entangled, and the moldability of the papermaking mat is more likely to be improved.

Moreover, dispersion of the organic fibers and the inorganic fibers is improved, leading to a more uniform structure of the papermaking mat, thereby improving the holding force.

In the papermaking mat of the present invention, the inorganic fibers preferably include one type of fiber or two or more types of fibers.

The fiber type(s) of the inorganic fibers is/are preferably selected in accordance with the functions required for the papermaking mat.

In particular, inclusion of two or more types of inorganic fibers provides a papermaking mat in which characteristics of the respective fibers are exhibited.

In the papermaking mat of the present invention, the inorganic fibers preferably include at least one selected from the group consisting of alumina fibers, refractory ceramic fibers (RCF), glass fibers, mullite fibers, silica fibers, basalt fibers, and bio-soluble fibers.

The papermaking mat including these inorganic fibers has sufficiently high heat resistance.

In the papermaking mat of the present invention, the inorganic fibers preferably include first inorganic fibers having an average fiber diameter of 3.0 to 20.0 µm and second inorganic fibers having an average fiber diameter of 0.1 to 15.0 µm.

Since the first inorganic fibers are thick, they have high strength and are less likely to break. Accordingly, even when the papermaking mat is subjected to stress, the papermaking mat can easily maintain its shape. In other words, the bending strength of the papermaking mat is improved.

Since the second inorganic fibers are thin, they are easily entangled with other inorganic fibers and the organic fibers. Accordingly, the moldability of the papermaking mat is improved.

In the papermaking mat of the present invention, the organic fibers include at least one selected from the group consisting of cellulose fibers, acrylic fibers, aramid fibers, PVA fibers, polyamide fibers, polyester fibers, polyethylene fibers, nylon fibers, polyurethane fibers, polychlal fibers, and polylactic acid fibers.

These organic fibers are suitable for improving the moldability of the papermaking mat of the present invention.

In the papermaking mat of the present invention, the organic fibers preferably each include a main fiber and a plurality of fine fibers that are fibrillated from at least a part of the entire surface of the main fiber.

When the organic fibers have such a form, the fine fibers readily become entwined around the surfaces of the inorganic fibers by means of an organic binder or an inorganic binder.

As a result, adhesion between the organic fibers and the inorganic fibers is improved, making it easier to improve the moldability of the papermaking mat. In addition, the bending strength of the papermaking mat is improved.

In the papermaking mat of the present invention, the organic fibers preferably have an average fiber diameter of 1 to 10 µm.

When the organic fibers have such a form, the organic fibers become stronger, making it easier to improve the moldability of the papermaking mat.

In the papermaking mat of the present invention, the fine fibers preferably have an average fiber diameter of 0.01 to 1 µm.

When the average fiber diameter of the fine fibers is within the above range, the fine fibers more readily become entwined around the surfaces of the inorganic fibers.

In the papermaking mat of the present invention, the organic binder preferably contains at least one selected from the group consisting of acrylic resins, acrylate latices, rubber latices, carboxymethyl cellulose, polyvinyl alcohol, styrene resins, and epoxy resins.

In the papermaking mat of the present invention, the inorganic binder preferably contains at least one selected from the group consisting of alumina, silica, silicon carbide, zirconia, boron nitride, diamond, and pumice.

These organic binders and inorganic binders are suitable for the papermaking mat of the present invention.

In the papermaking mat of the present invention, the ratio of the total weight of the organic fibers, the organic binder, and the inorganic binder to the weight of the inorganic fibers (([weight of the organic fibers] + [weight of the organic binder] + [weight of the inorganic binder])/[weight of the inorganic fibers]) is preferably 0.01 to 0.1.

When the ratio falls within such a range, the inorganic fiber content is high, meaning that the organic component content in the papermaking mat is relatively low.

Accordingly, even when the mat material of the present invention is disposed in an exhaust gas conversion apparatus and the organic components contained in the papermaking mat are decomposed by the heat of exhaust gas, the amount of gas generated is small.

In the papermaking mat of the present invention, the ratio of the weight of the organic fibers to the total weight of the organic fibers, the organic binder, and the inorganic binder ([weight of the organic fibers]/([weight of the organic fibers] + [weight of the organic binder] + [weight of the inorganic binder])) is preferably 0.01 to 0.9.

When the ratio falls within such a range, the organic fiber content is low, meaning that the organic component content in the papermaking mat is also sufficiently low.

Accordingly, even when the mat material of the present invention is disposed in an exhaust gas conversion apparatus and the organic components contained in the papermaking mat are decomposed by the heat of exhaust gas, the amount of gas generated is small.

In the papermaking mat of the present invention, the papermaking mat has a ratio of T₂ to T₁ (T₂/T₁) of 1.0 to 1.3, where T₁ is the thickness of the papermaking mat and T₂ is the thickness of the papermaking mat after heating at 50°C and 80% humidity for 24 hours.

For example, when the inorganic fibers are bonded by the organic binder, heating the papermaking mat softens the organic binder, making the inorganic fibers more easily released. As a result, the ratio tends to exceed 1.3. Such a papermaking mat can be regarded as having low moldability.

In contrast, since the papermaking mat of the present invention includes organic fibers, the inorganic fibers are less likely to be released even when the papermaking mat is heated. Therefore, the ratio tends to be 1.3 or less. Such a papermaking mat can be regarded as having high moldability.

The papermaking mat of the present invention is preferably used as a holding material of an exhaust gas conversion apparatus including a metal casing, an exhaust gas treatment unit housed in the metal casing, and a holding material between the metal casing and the exhaust gas treatment unit.

As described above, since the weight proportion of the organic components in the papermaking mat of the present invention is low, even when the organic components are decomposed by the heat of exhaust gas, the holding force of the papermaking mat is less likely to decrease.

Therefore, the papermaking mat of the present invention is suitable as a holding material in an exhaust gas conversion apparatus.

The laminated sheet-equipped papermaking mat of the present invention includes: the papermaking mat of the present invention; and a laminated sheet material including a plurality of fibers and placed on at least one main surface of the papermaking mat.

In the laminated sheet-equipped papermaking mat of the present invention, the laminated sheet material is preferably a web-like body including fiber bundles for a laminated sheet material each formed by entangling a plurality of fibers, and single fibers for a laminated sheet material.

The laminated sheet-equipped papermaking mat of the present invention is to be wound around an exhaust gas treatment unit and disposed in an exhaust gas conversion apparatus.

At this time, stress is applied to the main surface of the papermaking mat, making cracks likely to occur on the main surface of the papermaking mat.

However, when the laminated sheet is disposed on the main surface of the papermaking mat, such cracks can be prevented.

The laminated sheet-equipped papermaking mat of the present invention has an organic component content of 8% by weight or less.

The laminated sheet-equipped papermaking mat of the present invention is to be disposed in an exhaust gas conversion apparatus.

When the organic component content in the laminated sheet-equipped papermaking mat of the present invention is 8% by weight or less, even when exhaust gas reaches the exhaust gas conversion apparatus in which the laminated sheet-equipped papermaking mat of the present invention is disposed and the organic components are decomposed by the heat of the exhaust gas, the amount of gas generated is small. Accordingly, generation of odor associated with the gas generation can be suppressed.

### - Advantageous Effects of Invention

The present invention can provide a papermaking mat with high moldability despite having a low organic component content.

### BRIEF DESCRIPTION OF DRAWINGS

FIG. 1 is a schematic perspective view of an example of the papermaking mat of the present invention.
FIG. 2 is an enlarged schematic view of an example of a state in which a plurality of inorganic fibers are bonded to each other in the papermaking mat of the present invention.
FIG. 3 is a schematic view of an example of a fiber bundle formed by entangling and twisting inorganic fibers contained in the papermaking mat of the present invention.
FIG. 4 is a schematic view of an example of organic fibers included in the papermaking mat of the present invention.
FIG. 5 is a schematic cross-sectional view of an example of an exhaust gas conversion apparatus in the present invention.
FIG. 6 is a schematic perspective view of an example of the laminated sheet-equipped papermaking mat of the present invention.
FIG. 7 is an enlarged schematic plan view of an example of the laminated sheet in FIG. 6.
FIG. 8 is an enlarged photograph of inorganic fibers constituting the papermaking mat according to Example 1.
FIG. 9 is an enlarged photograph of inorganic fibers constituting the papermaking mat according to Example 2.

### DESCRIPTION OF EMBODIMENTS

Hereinafter, the papermaking mat of the present invention is specifically described. The present invention is not limited to the features described below, and suitable modifications may be made without departing from the scope of the present invention. The present invention also encompasses a combination of two or more preferred features of the present invention described below.

### (First embodiment)

A papermaking mat according to a first embodiment of the present invention is described with reference to the drawing.

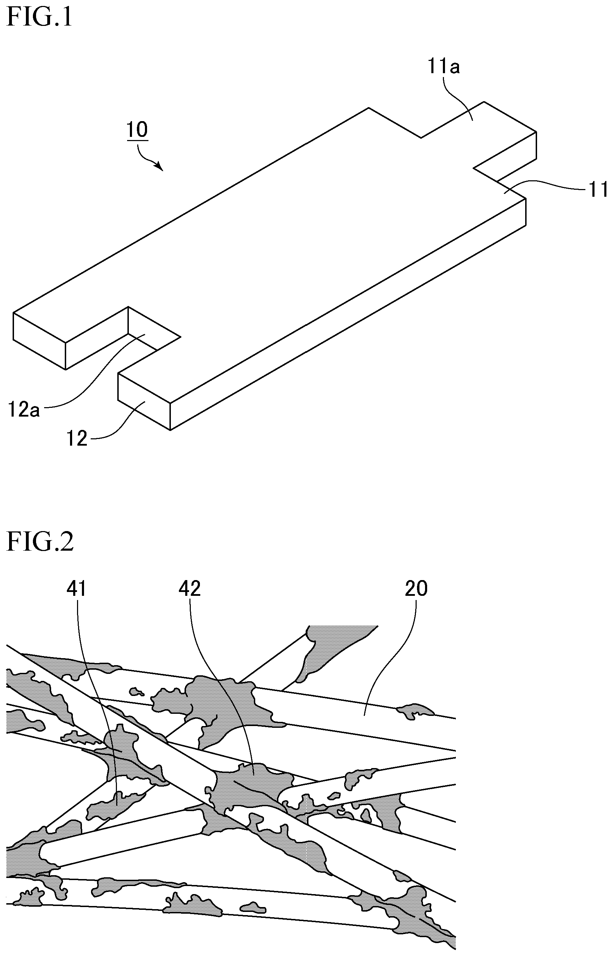

FIG. 1 is a schematic perspective view of an example of the papermaking mat of the present invention.

As shown in FIG. 1, a papermaking mat 10 is a papermaking mat having a rectangular shape in a plan view and made of inorganic fibers.

The papermaking mat 10 has a rectangular shape in a plan view, with a protrusion 11a at one end 11 and a recess 12a at another end 12.

The papermaking mat 10 is wound around an exhaust gas treatment unit and disposed in an exhaust gas conversion apparatus, which is described in detail later.

The protrusion 11a and the recess 12a have shapes that are exactly fitted to each other when the papermaking mat 10 is wound around the exhaust gas treatment unit.

The protrusion 11a and the recess 12a, when provided, improve sealing properties when the papermaking mat 10 is disposed in the exhaust gas conversion apparatus described later.

The papermaking mat 10 includes inorganic fibers, organic fibers, an organic binder, and an inorganic binder, and has an organic component content of 5% by weight or less.

The organic component content is preferably 0.5 to 4.5% by weight.

The papermaking mat 10 may include only one of the organic binder and the inorganic binder.

The papermaking mat 10 includes organic fibers.

In the papermaking mat 10, the organic fibers are entangled with inorganic fibers.

At portions where the inorganic fibers and the organic fibers are entangled, frictional resistance is generated. In addition, since the organic fibers have shape-retaining properties, they are less likely to be displaced. Therefore, the papermaking mat 10 has high moldability.

In the papermaking mat 10, a plurality of inorganic fibers are bonded by a mixture of organic fibers, an organic binder, and an inorganic binder.

Such an embodiment will be described with reference to the drawing.

FIG. 2 is an enlarged schematic view of an example of a state in which a plurality of inorganic fibers are bonded to each other in the papermaking mat of the present invention.

As shown in FIG. 2, in the papermaking mat 10, a plurality of inorganic fibers 20 intersect and are in contact with each other.

A mixture 41 in which organic fibers, an organic binder, and an inorganic binder are mixed is present on surfaces of the inorganic fibers 20, and a mixture 42 in which organic fibers, an organic binder, and an inorganic binder are mixed is present at intersections of the inorganic fibers 20. For convenience of explanation, the mixture 41 and the mixture 42 are separately illustrated in FIG. 2; however, these mixtures have the same chemical composition.

Such mixtures 41 and 42 improve the moldability of the papermaking mat 10 by bonding the inorganic fibers 20 to each other.

As will be described in detail later, the papermaking mat 10 is to be disposed in an exhaust gas conversion apparatus.

In the papermaking mat 10, the organic component content is 5% by weight or less; therefore, even when exhaust gas reaches the exhaust gas conversion apparatus and the organic components contained in the papermaking mat 10 are decomposed by the heat of the exhaust gas, the amount of gas generated is small. Moreover, since the weight proportion of the organic components in the papermaking mat 10 is low, even when the organic components are decomposed by the heat of the exhaust gas, the holding force of the papermaking mat 10 is less likely to decrease.

The "organic component content (% by weight) in a papermaking mat" herein is calculated as follows.

First, a weight W₁ of the papermaking mat is measured.

Next, the papermaking mat is heated at 600°C for one hour to decompose the organic components. Then, a weight W₂ of the papermaking mat is measured.

The organic component content (% by weight) in the papermaking mat is calculated according to the following equation (1): 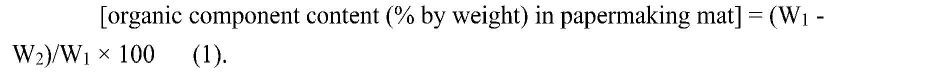 [organic component content (% by weight) in papermaking mat] = (W1 - W2)/W1 × 100 (1).

Preferred embodiments of respective components constituting the papermaking mat 10 will be described below.

### (Inorganic fibers)

The inorganic fibers constituting the papermaking mat 10 preferably include one type of fiber or two or more types of fibers.

The fiber type(s) of the inorganic fibers is/are preferably selected in accordance with the functions required for the papermaking mat 10.

In particular, inclusion of two or more types of inorganic fibers provides a papermaking mat 10 in which characteristics of the respective fibers are exhibited.

The inorganic fibers preferably include at least one selected from the group consisting of alumina fibers, refractory ceramic fibers (RCF), glass fibers, mullite fibers, silica fibers, basalt fibers, and bio-soluble fibers.

The papermaking mat 10 including these inorganic fibers has sufficiently high heat resistance.

The inorganic fibers 20 constituting the papermaking mat 10 preferably have an average fiber diameter of 0.1 to 50.0 µm and an average fiber length of 100 to 100000 µm.

In the papermaking mat 10, the inorganic fibers preferably include first inorganic fibers having an average fiber diameter of 3.0 to 20.0 µm and second inorganic fibers having an average fiber diameter of 0.1 to 15.0 µm.

Since the first inorganic fibers are thick, they have high strength and are less likely to break. Accordingly, even when the papermaking mat 10 is subjected to stress, the papermaking mat 10 can easily maintain its shape. In other words, the bending strength of the papermaking mat 10 is improved.

Since the second inorganic fibers are thin, they are easily entangled with other inorganic fibers and the organic fibers. Accordingly, the moldability of the papermaking mat 10 is improved.

The first inorganic fibers preferably consist of alumina fibers, and the second inorganic fibers preferably consist of fibers other than alumina fibers (for example, refractory ceramic fibers).

The inorganic fiber content in the papermaking mat 10 is preferably 95.0 to 99.8% by weight, more preferably 96.5 to 99.5% by weight.

When the inorganic fiber content falls within the above range, the bulk density of the papermaking mat 10 becomes sufficiently high, making gas leakage less likely to occur when the papermaking mat 10 is disposed in an exhaust gas conversion apparatus.

The papermaking mat 10 may include fiber bundles each formed by entangling and twisting inorganic fibers.

Such fiber bundles will be described with reference to the drawing.

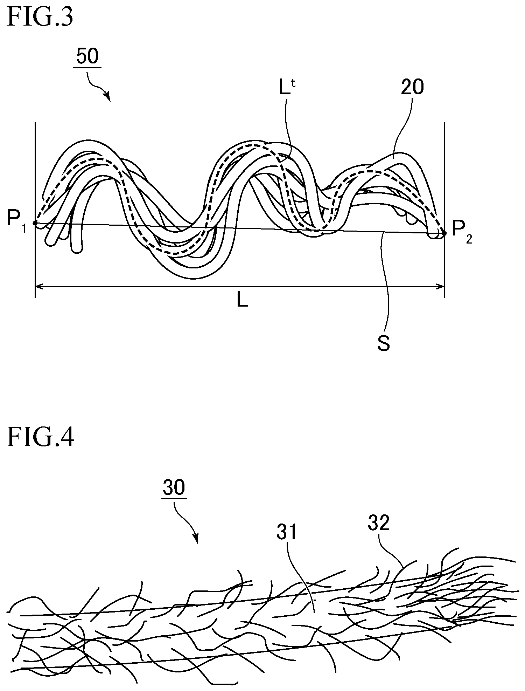

FIG. 3 is a schematic view of an example of a fiber bundle formed by entangling and twisting inorganic fibers contained in the papermaking mat of the present invention.

A fiber bundle 50 shown in FIG. 3 includes a plurality of inorganic fibers 20 that are entangled and twisted.

The fiber bundle 50 is in a crimped state. The fiber bundles in the papermaking mat of the present invention are not limited to being in such a crimped state.

In the fiber bundle 50, the inorganic fibers 20 are entangled and twisted together, and support one another. Therefore, the fiber bundle 50 is not easily deformed by pressure. Therefore, when a pressure is applied to the papermaking mat 10, the fiber bundle 50 serves as a core and can reduce the pressure applied to the inorganic fibers 20 that do not constitute the fiber bundle 50. This makes it possible to prevent the inorganic fibers 20 that do not constitute the fiber bundle 50 from being broken by pressure. As a result, the surface pressure of the papermaking mat 10 increases.

In particular, when the fiber bundle 50 is in a crimped state, the above effect is suitably exerted, and the surface pressure of the papermaking mat 10 further increases.

In the fiber bundle 50 shown in FIG. 3, a trace length L^{t} of the fiber bundle 50 measured by a trace length measurement method described below is preferably longer than a length L of the fiber bundle 50. The trace length L^{t} is more preferably longer than the length L by 0.1 mm or more, still more preferably by 0.2 to 0.6 mm.

### (Trace length measurement method)

A fiber bundle 50 is placed stationary on a flat surface.

Next, the stationary fiber bundle 50 is traced therealong from one end P₁ to another end P₂ of the fiber bundle 50 viewed from above, and the traced distance L^{t} is defined as "the trace length of the fiber bundle".

When the trace length L^{t} of the fiber bundle 50 is greater than the length L of the fiber bundle 50, the fiber bundle 50 has high elasticity, increasing the surface pressure of the papermaking mat 10.

Preferably, in the papermaking mat 10, the fiber bundle 50 includes a crimped fiber bundle 50 in which a line segment S interconnecting the end P₁ and the end P₂ is crossed two or more times during tracing of the fiber bundle 50 in measuring the "trace length of the crimped fiber bundle".

The degree of crimp of the fiber bundle 50 in such a state is suitable, increasing the elasticity of the fiber bundle 50 and improving the surface pressure of the papermaking mat 10.

In the papermaking mat 10, the ratio of the trace length L^{t} of the fiber bundle 50 to the length L of the fiber bundle 50 (L^{t}/L) is preferably 1.1 to 1.6.

Preferably, the bulk density of the papermaking mat 10 is 0.05 to 0.30 g/cm³.

When the bulk density of the papermaking mat 10 is less than 0.05 g/cm³, the entanglement of the inorganic fibers is weak, and the inorganic fibers are easily separated from each other, making it difficult to maintain the papermaking mat in a predetermined shape.

When the bulk density of the papermaking mat 10 is more than 0.30 g/cm³, the papermaking mat is hard with poor winding properties and is prone to tearing.

### (Organic fibers)

The organic fibers constituting the papermaking mat 10 preferably include at least one selected from the group consisting of cellulose fibers, acrylic fibers, aramid fibers, PVA fibers, polyamide fibers, polyester fibers, polyethylene fibers, nylon fibers, polyurethane fibers, polychlal fibers, and polylactic acid fibers.

These organic fibers are suitable for improving the moldability of the papermaking mat of the present invention.

In the papermaking mat 10, the organic fibers preferably have an average fiber length of 100 µm or more.

When the average fiber length of the organic fibers falls within such a range, the organic fibers and the inorganic fibers are more easily entangled, and the moldability of the papermaking mat 10 is improved.

In the papermaking mat 10, the organic fibers preferably have an average fiber diameter of 1.0 to 10.0 µm, more preferably 2.0 to 10.0 µm.

When the organic fibers have such a form, the organic fibers become stronger, making it easier to improve the moldability of the papermaking mat 10.

When the average fiber diameter of the organic fibers is less than 1 µm, the organic fibers become weaker, making it difficult to improve the moldability of the papermaking mat.

When the average fiber diameter of the organic fibers exceeds 10 µm, the organic fibers and the inorganic fibers are less likely to be entangled.

The organic fiber content in the papermaking mat 10 is preferably 4.5% by weight or less, more preferably 1.0 to 4.0% by weight.

The organic fiber content in the papermaking mat 10 can be calculated by measuring weights before and after heating the papermaking mat 10 to thermally decompose the organic fibers.

When the papermaking mat 10 includes both organic fibers and an organic binder, the organic fiber content can be measured based on a change in weight during heating of the papermaking mat 10 by utilizing a difference between the thermal decomposition temperature of the organic fibers and the thermal decomposition temperature of the organic binder.

In the papermaking mat 10, the organic fibers preferably include a main fiber and a plurality of fine fibers that are fibrillated from at least a part of the entire surface of the main fiber.

Such organic fibers will be described with reference to the drawing.

FIG. 4 is a schematic view of an example of organic fibers included in the papermaking mat of the present invention.

An organic fiber 30 shown in FIG. 4 includes a main fiber 31 and a plurality of fine fibers 32 that are fibrillated from at least a part of the entire surface of the main fiber 31.

The fine fibers 32 may be fibrillated from side surfaces of the main fiber 31, or may be fibrillated from end surfaces of the main fiber 31.

When the organic fibers have such a form, the fine fibers readily become entwined around the surfaces of the inorganic fibers by means of an organic binder or an inorganic binder.

As a result, adhesion between the organic fibers and the inorganic fibers is improved. Accordingly, even when the organic fiber content is low, the moldability of the papermaking mat is easily improved. In addition, the bending strength of the papermaking mat is improved.

Further, since the organic fiber content in the papermaking mat can be reduced, even when the organic components are decomposed by the heat of exhaust gas, the amount of gas generated can be reduced, and the holding force of the papermaking mat can be sufficiently increased.

In the papermaking mat 10, the fine fibers preferably have an average fiber diameter of 0.01 to 1 µm, more preferably 0.05 to 0.8 µm.

When the average fiber diameter of the fine fibers is within the above range, the fine fibers more readily become entwined around the surfaces of the inorganic fibers.

In the papermaking mat of the present invention, when organic fibers each including a main fiber and fine fibers are placed stationary and observed from above, an area of the contour of the main fiber is preferably 10% or more of an area of a region formed by connecting tips of the fine fibers.

### (Organic binder)

In the papermaking mat 10, the glass transition temperature Tg of the organic binder is preferably 5°C or lower, more preferably -35°C to 5°C.

When the organic binder has a glass transition temperature Tg of 5°C or lower, an organic binder film formed of the organic binder has high strength, and a papermaking mat having high film elongation and excellent flexibility can be obtained.

The papermaking mat 10 also becomes less prone to tearing when being wound around an exhaust gas treatment unit, for example. Further, the resulting organic binder film is not too hard, so that it exhibits an effect of keeping the inorganic fibers connected to each other at breakage of the inorganic fibers and can reduce or prevent scattering of the inorganic fibers.

An organic binder having a glass transition temperature Tg of lower than -35°C is expensive and increases manufacturing cost.

When the glass transition temperature Tg of the organic binder is higher than 5°C, the resulting papermaking mat may have low flexibility and a low degree of breaking elongation.

In the papermaking mat 10, the organic binder preferably includes at least one selected from the group consisting of acrylic resins, acrylate latices, rubber latices, carboxymethyl cellulose, polyvinyl alcohol, styrene resins, and epoxy resins.

These organic binders are suitable for bonding the inorganic fibers to each other and maintaining the shape of the papermaking mat.

In the papermaking mat 10, the organic binder content is preferably 0.1 to 3.0% by weight.

### (Inorganic binder)

In the papermaking mat 10, preferably, the inorganic binder contains at least one selected from alumina, silica, silicon carbide, zirconia, boron nitride, diamond, and pumice.

These inorganic binders are suitable for bonding the inorganic fibers to each other and maintaining the shape of the papermaking mat.

In the papermaking mat 10, the inorganic binder content is preferably 0.1 to 5.0% by weight.

In the papermaking mat 10, the ratio of the average fiber diameter of the organic fibers to the average fiber diameter of the inorganic fibers ([average fiber diameter of the organic fibers]/[average fiber diameter of the inorganic fibers]) is preferably 0.1 to 1.5, more preferably 0.3 to 1.2.

When the ratio falls within such a range, the inorganic fibers and the organic fibers are more easily entangled, and the moldability of the papermaking mat is more likely to be improved.

Moreover, dispersion of the organic fibers and the inorganic fibers is improved, leading to a more uniform structure of the papermaking mat, thereby improving the holding force.

In the papermaking mat 10, the ratio of the total weight of the organic fibers, the organic binder, and the inorganic binder to the weight of the inorganic fibers (([weight of the organic fibers] + [weight of the organic binder] + [weight of the inorganic binder])/[weight of the inorganic fibers]) is preferably 0.01 to 0.1, more preferably 0.05 to 0.09.

When the ratio falls within such a range, the inorganic fiber content is high, meaning that the organic component content in the papermaking mat 10 is relatively low.

Accordingly, even when the papermaking mat 10 is disposed in an exhaust gas conversion apparatus and the organic components contained in the papermaking mat 10 are decomposed by the heat of exhaust gas, the amount of gas generated is small.

In the papermaking mat 10, the ratio of the weight of the organic fibers to the total weight of the organic fibers, the organic binder, and the inorganic binder ([weight of the organic fibers]/([weight of the organic fibers] + [weight of the organic binder] + [weight of the inorganic binder])) is preferably 0.01 to 0.9, more preferably 0.05 to 0.8.

When the ratio falls within such a range, the organic fiber content is low, meaning that the organic component content in the papermaking mat 10 is also sufficiently low.

Accordingly, even when the papermaking mat 10 is disposed in an exhaust gas conversion apparatus and the organic components contained in the papermaking mat 10 are decomposed by the heat of exhaust gas, the amount of gas generated is small.

The papermaking mat 10 preferably has a ratio of T₂ to T₁ (T₂/T₁) of 1.0 to 1.3, more preferably 1.05 to 1.25, where T₁ is the thickness of the papermaking mat 10 and T₂ is the thickness of the papermaking mat after heating at 50°C and 80% humidity for 24 hours.

For example, when the inorganic fibers are bonded by the organic binder, heating the papermaking mat softens the organic binder, making the inorganic fibers more easily released. As a result, the ratio tends to exceed 1.3. Such a papermaking mat can be regarded as having low moldability.

In contrast, since the papermaking mat 10 includes organic fibers, the inorganic fibers are less likely to be released even when the papermaking mat 10 is heated. Therefore, the ratio tends to be 1.3 or less. Such a papermaking mat 10 can be regarded as having high moldability.

Next, a method for producing a papermaking mat of the present invention is described.

### [Fiber opening step]

In the fiber opening step, water is added to inorganic fibers before opening to open the fibers, thereby preparing an inorganic fiber dispersion.

The inorganic fibers before opening may be produced by a conventionally known method or may be a commercially available product. The inorganic fibers before opening may be derived from a needle mat or may be derived from a papermaking mat.

Examples of a method for producing the inorganic fibers before opening include the following.

Specifically, a spinning mixture containing basic aluminum chloride and a silica sol is spun by a blowing method to prepare an inorganic fiber precursor. Next, the inorganic fiber precursor is compressed to prepare a rectangular sheet, and the compressed sheet is fired to prepare inorganic fibers before opening composed of silica-alumina fibers.

A method for opening the fibers is not limited. Dry opening may be performed on the inorganic fibers before opening, followed by addition of water to perform wet opening, or water may be added from the beginning to perform wet opening.

Fiber opening can be performed using machines such as a slush pulper, a feather mill, a disc mill, a bale opener, a beater, a hammer mill, a carding machine, and a wool picker.

Fiber opening may be performed using one type of machine or using two or more types of machines.

When wet opening is performed, opening using a slush pulper is preferred.

A slurry containing inorganic fibers can thereby be obtained.

Opening a needle mat or a papermaking mat provides a slurry containing fiber bundles each formed by entangling and twisting inorganic fibers.

When a needle mat or a papermaking mat is subjected to fiber opening, firing is performed at 700°C to 1000°C for 1.0 to 8.0 hours prior to the opening.

This process thermally decomposes the organic binder contained in the needle mat or the papermaking mat, thereby facilitating fiber opening of the needle mat or the papermaking mat.

### [Organic fiber preparation step]

Next, organic fibers are prepared. The organic fibers may be produced by a conventionally known method or may be a commercially available product.

Since preferred types, average fiber length, and average fiber diameter of the organic fibers are as described above, a description thereof is omitted here.

When organic fibers each including a main fiber and a plurality of fine fibers that are fibrillated from at least a part of the entire surface of the main fiber are used as the organic fibers, the organic fibers may be stirred using a mixer mill or the like.

For example, water is added to organic fibers having a solid content of 2.0 g so as to achieve a concentration of 2.0% by weight, and the mixture is placed in a mixer (product name: SJM-M1000P, manufacturer: Ishizaki Electric Mfg. Co., Ltd.) and stirred at 13,000 to 18,000 rpm for 3.0 to 5.0 minutes, thereby obtaining organic fibers each including a main fiber and a plurality of fine fibers that are fibrillated from at least a part of the entire surface of the main fiber.

Alternatively, beating may be performed using a disc refiner or the like.

For example, water is added to organic fibers having a solid content of 100.0 g so as to achieve a concentration of 2.0% by weight, and the mixture is placed in a disc refiner (product name: KRK type, manufacturer: Kumagai Riki Kogyo Co., Ltd.) and beaten under conditions of 3000 rpm, a GAP of 0.05 to 0.10 mm, and one or more passes, thereby obtaining organic fibers each including a main fiber and a plurality of fine fibers that are fibrillated from at least a part of the entire surface of the main fiber.

### [Papermaking slurry preparation step]

Next, organic fibers and an organic binder and/or an inorganic binder are added to the slurry containing inorganic fibers, and mixed to prepare a papermaking slurry.

At this time, concentrations of respective components are adjusted so that, in a papermaking mat obtained through a papermaking step described later, the total weight of the organic fibers and the organic binder is 5% by weight or less based on the weight of the papermaking mat.

Since the organic fibers and the organic binder serve as organic components in the papermaking mat, such adjustment enables production of a papermaking mat in which the organic component content is 5% by weight or less.

### [Papermaking step]

Next, the papermaking slurry is poured into a molding machine having a mesh for filtering on its bottom to remove a solvent in the papermaking slurry, whereby an inorganic fiber aggregate is obtained. Then, the inorganic fiber aggregate is dehydrated and dried, whereby the papermaking mat of the present invention can be obtained.

In the papermaking step, the inorganic fiber aggregate may be dried by thermal compression. During thermal compression, the inorganic fiber aggregate may be heat-treated for drying by passing hot air therethrough or may be in a wet state without being heat-treated.

In the heat treatment, if performed, the heating temperature and the hot air temperature are preferably 150°C to 210°C in order to prevent thermal deterioration of the organic fibers and the organic binder.

In the range of 150°C to 210°C, it is possible to remove the water content from the inorganic fiber aggregate while preventing deterioration of the organic fibers and the organic binder. When the heating temperature and the hot air temperature are lower than 150°C, the temperature does not transfer to a central portion of the inorganic fiber aggregate, resulting in a longer drying time. When the heating temperature and the hot air temperature are higher than 210°C, the organic fibers and the organic binder are deteriorated, and the binding force between fibers is reduced, making it difficult to control the thickness of the inorganic fiber aggregate.

In the method for producing a papermaking mat of the present invention, preferably, batchwise papermaking or continuous papermaking is performed in the papermaking step.

Batchwise papermaking or continuous papermaking facilitates production of the papermaking mat of the present invention.

Next, a method for using the papermaking mat of the present invention is described.

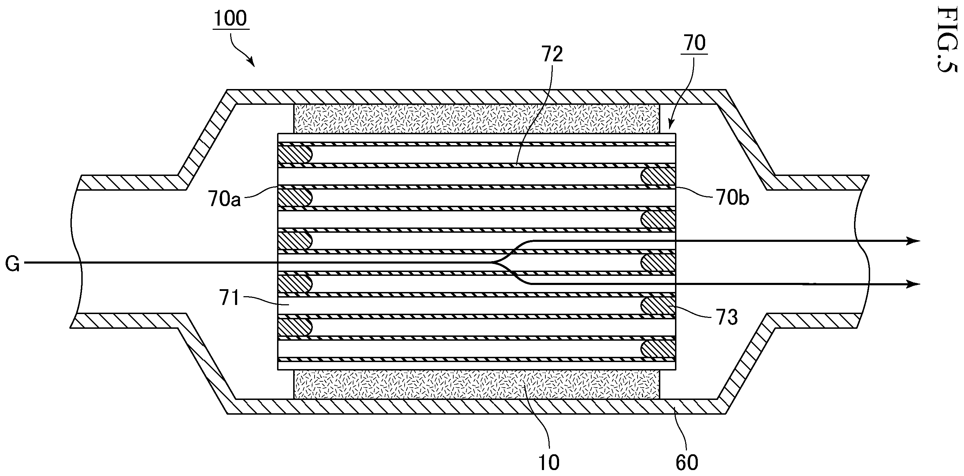

FIG. 5 is a schematic cross-sectional view of an example of the exhaust gas conversion apparatus in the present invention.

As shown in FIG. 5, an exhaust gas conversion apparatus 100 includes a metal casing 60, an exhaust gas treatment unit 70 housed in the metal casing 60, and the papermaking mat 10 that is a holding material between the exhaust gas treatment unit 70 and the metal casing 60. The papermaking mat 10 is the papermaking mat of the present invention.

The exhaust gas treatment unit 70 has a pillar shape in which many cells 71 are arranged in parallel in a longitudinal direction with a cell wall 72 between the cells. If necessary, an inlet tube for introducing exhaust gas discharged from an internal combustion engine and an outlet tube for discharging the exhaust gas that has passed through the exhaust gas conversion apparatus are connected to ends of the metal casing 60.

In the exhaust gas conversion apparatus 100 shown in FIG. 5, although the exhaust gas treatment unit 70 is an exhaust gas filter (honeycomb filter) in which one of the ends of each cell is plugged with a plug 73, the exhaust gas treatment unit 70 may be a catalyst carrier not plugged with plugs at either end surface.

As shown in FIG. 5, the exhaust gas that was discharged from the internal combustion engine and that flowed into the exhaust gas conversion apparatus 100 (in FIG. 5, the exhaust gas is denoted by G, and the exhaust gas flow is indicated by arrows) flows into one of the cells 71 open at an exhaust gas inlet-side end 70a of the exhaust gas treatment unit (honeycomb filter) 70, and then passes through the cell wall 72 between the cells 71. At this point, PM in the exhaust gas is collected by the cell wall 72, and the exhaust gas is converted. The converted exhaust gas flows out from another cell 71 open at an exhaust gas discharge-side end 70b and is discharged to the outside.

As described above, the papermaking mat 10 holds the exhaust gas treatment unit 70 and prevents the exhaust gas treatment unit 70 from falling out of the metal casing 60 even when the exhaust gas treatment unit 70 is subjected to high pressure from exhaust gas during use of the exhaust gas conversion apparatus 100.

The exhaust gas treatment unit 70 may include a porous non-oxide ceramic such as silicon carbide or silicon nitride or may include a porous oxide ceramic such as SiAlON, alumina, cordierite, or mullite. Silicon carbide is preferred among these.

When the exhaust gas treatment unit 70 is a silicon carbide porous ceramic, the porosity of the porous ceramic is not limited but is preferably 35% to 60%.

When the porosity is less than 35%, the exhaust gas treatment unit may be quickly clogged. In contrast, when the porosity is more than 60%, the exhaust gas treatment unit may have low strength and easily break.

Preferably, the porous ceramic has an average pore size of 5 to 30 µm.

When the average pore size is less than 5 µm, clogging with PM may easily occur.

When the average pore size is more than 30 µm, the exhaust gas treatment unit may not function as a filter because PM passes through the pores and cannot be collected.

The porosity and the pore size can be measured by a conventionally known method for measurement using a scanning electron microscope (SEM).

The cell density on a cross section of the exhaust gas treatment unit 70 is not limited, but a preferred lower limit is 31.0 pcs/cm² (200 pcs/inch²) and a preferred upper limit is 93.0 pcs/cm² (600 pcs/inch²). A more preferred lower limit is 38.8 pcs/cm² (250 pcs/inch²) and a more preferred upper limit is 77.5 pcs/cm² (500 pcs/inch²).

The exhaust gas treatment unit 70 may support a catalyst for converting the exhaust gas. Preferred examples of the catalyst to be supported include noble metals such as platinum, palladium, and rhodium, with platinum being more preferred. As another catalyst, for example, an alkali metal such as potassium or sodium, or an alkaline earth metal such as barium can also be used. These catalysts may be used alone or in combination of two or more thereof.

These catalysts, when supported, facilitate removal of PM by combustion and enable conversion of toxic exhaust gas.

The metal casing 60 has a substantially cylindrical shape.

Preferably, the inner diameter of the metal casing 60 (inner diameter of a portion for housing the exhaust gas treatment unit) is slightly smaller than the diameter of the exhaust gas treatment unit 70 around which the papermaking mat 10 is wound.

The metal casing 60 is preferably made of stainless steel, although not limited thereto.

### (Second embodiment)

Next, a laminated sheet-equipped papermaking mat according to a second embodiment of the present invention is described.

The laminated sheet-equipped papermaking mat according to the second embodiment of the present invention includes: the papermaking mat according to the first embodiment of the present invention; and a laminated sheet material including a plurality of fibers and placed on at least one main surface of the papermaking mat.

The laminated sheet-equipped papermaking mat of the present invention is to be wound around an exhaust gas treatment unit and disposed in an exhaust gas conversion apparatus.

At this time, stress is applied to the main surface of the papermaking mat, making cracks more likely to occur on the main surface of the papermaking mat.

However, when the laminated sheet is disposed on the main surface of the papermaking mat, such cracks can be prevented.

The laminated sheet material composed of a plurality of fibers may be a nonwoven fabric or a woven fabric.

Fibers constituting the laminated sheet material may be organic fibers or inorganic fibers, and organic fibers are preferred.

Examples of materials of the organic fibers include polyethylene terephthalate (PET), polyethylene (PE), and polypropylene (PP).

The laminated sheet material is preferably a web-like body including fiber bundles for a laminated sheet material each formed by entangling a plurality of fibers, and single fibers for a laminated sheet material.

The laminated sheet-equipped papermaking mat including the laminated sheet material that is a web-like body including fiber bundles for a laminated sheet material and single fibers for a laminated sheet material is described with reference to the following drawings.

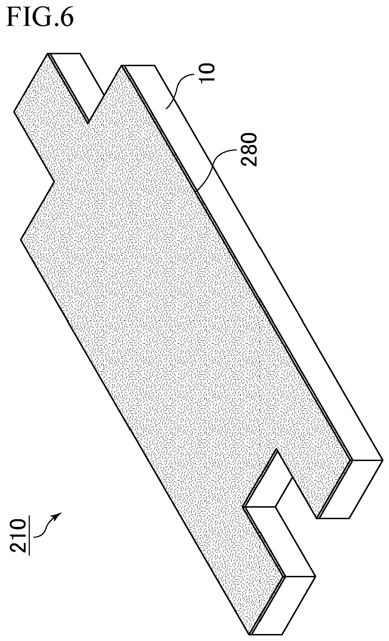

FIG. 6 is a schematic perspective view of an example of the laminated sheet-equipped papermaking mat of the present invention.

As shown in FIG. 6, a laminated sheet-equipped papermaking mat 210 includes the papermaking mat 10 and a laminated sheet material 280 disposed on a main surface of the papermaking mat 10.

Preferred configurations of the papermaking mat 10 are as described above, and a detailed description thereof is omitted here.

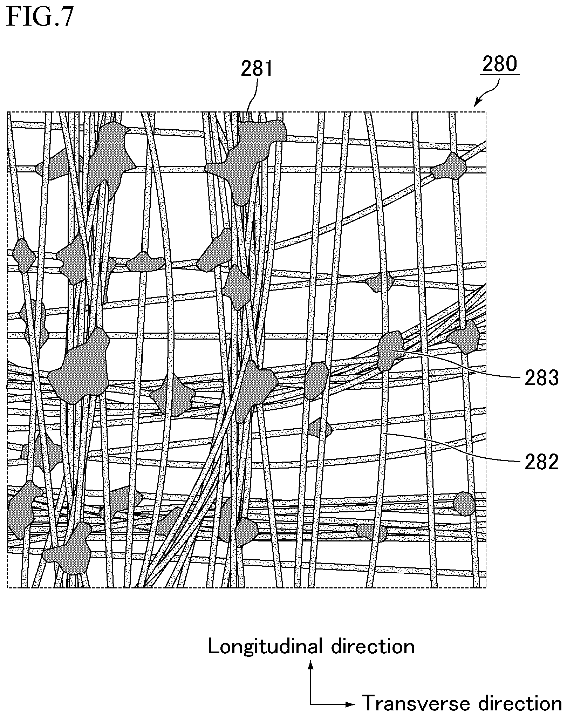

FIG. 7 is an enlarged schematic plan view of an example of the laminated sheet in FIG. 6.

As shown in FIG. 7, the laminated sheet material 280 is a web-like body including fiber bundles 281 for a laminated sheet material each formed by entangling a plurality of fibers, and single fibers 282 for a laminated sheet material.

Similar to the papermaking mat 10 described above, the laminated sheet-equipped papermaking mat 210 is to be wound around an exhaust gas treatment unit and disposed in an exhaust gas conversion apparatus.

At this time, stress is applied to the main surface of the papermaking mat 10, making cracks more likely to occur on the main surface of the papermaking mat 10.

However, when the laminated sheet material 280 is disposed on the main surface of the papermaking mat 10, such cracks can be prevented.

A plurality of fibers constituting each fiber bundle 281 for a laminated sheet material are twisted and entangled with one another. Since the fibers constituting each fiber bundle 281 for a laminated sheet material are not fused together but merely entangled with one another, the laminated sheet material 280 has high flexibility.

The number of fibers constituting each fiber bundle 281 for a laminated sheet material is not particularly limited; however, the number is preferably 2 or more and 10 or less, more preferably 3 or more and 7 or less.

The single fibers 282 for a laminated sheet material are fibers that are not entangled with other fibers.

The fiber bundles 281 for a laminated sheet material include a plurality of fiber bundles having different extension directions, and the laminated sheet material 280 is formed of such a plurality of fiber bundles and the single fibers 282. As a result, in the laminated sheet material 280, the number of fibers in a longitudinal direction and the number of fibers in a transverse direction can be made substantially equal.

In the laminated sheet material 280, fibers extending in two directions, namely a longitudinal direction and a transverse direction, are present, including longitudinally oriented fibers and transversely oriented fibers.

Accordingly, the laminated sheet material 280 is a nonwoven fabric composed of longitudinally oriented fibers in which fibers are oriented in the longitudinal direction and transversely oriented fibers in which fibers are oriented (arranged) in the transverse direction, thus having fiber orientations in both directions.

The nonwoven fabric is produced using a production process in which fibers are directly spun from raw materials, and long filament fibers are oriented in respective longitudinal and transverse directions by extending the spun fibers in each of these directions.

Fibers forming the laminated sheet material 280 are not necessarily linearly extended, and at least a part of the fibers forming the laminated sheet material 280 may be curved. As a result, intersections between the fibers forming the laminated sheet material 280 increase, allowing stress applied to the laminated sheet material 280 to be dispersed, thereby further suppressing occurrence of cracks during winding of the papermaking mat 10.

The laminated sheet material 280 may be a three-dimensional web-like body.

This configuration further improves the strength of the laminated sheet material 280 and disperses stress applied to the laminated sheet material 280, thereby more efficiently suppressing occurrence of cracks on a main surface of the laminated sheet-equipped papermaking mat 210.

The laminated sheet material 280 may include fibers extending in three or more directions. For example, in addition to longitudinally oriented fibers and transversely oriented fibers, fibers extending in an oblique direction may be included. With such fibers, fiber bundles and single fibers extending in the oblique direction may also be present.

Fibers constituting the laminated sheet material 280 (hereinafter referred to as "web fibers") preferably include long filament fibers.

The long filament fibers are preferably longer than the lengths of ordinary staple fibers (for example, 10 to 50 mm), and the average fiber length of the filaments is preferably greater than 100 mm, more preferably several hundred millimeters or more.

The long filament fibers may be continuous fibers.

The average fiber diameter of the web fibers in main constituent filaments is usually 10 µm or less and preferably around 5 µm.

The web fibers are preferably composed of at least one of organic fibers or inorganic fibers.

For example, the longitudinally oriented fibers may be composed of organic fibers and/or inorganic fibers, and the transversely oriented fibers may be composed of organic fibers and/or inorganic fibers. Materials of the longitudinally oriented fibers and the transversely oriented fibers may differ from each other.

The web fibers are more preferably composed of organic fibers. This configuration more effectively suppresses occurrence of cracks on the main surface of the papermaking mat.

Examples of preferred materials of the web fibers include polyethylene terephthalate (PET), polyethylene (PE), and polypropylene (PP).

As shown in FIG. 7, the laminated sheet material 280 may further include a plurality of base portions 283 composed of an organic material. From each of the base portions 283, fiber bundles 281 for a laminated sheet material and single fibers 282 for a laminated sheet material may extend in a plurality of directions.

The base portions 283 are distributed within the laminated sheet material 280, and each base portion 283 joins the fiber bundles 281 for a laminated sheet material and the single fibers 282 for a laminated sheet material that extend in different directions to each other. That is, the base portions 283 are disposed in regions where the fiber bundles 281 for a laminated sheet material and the single fibers 282 for a laminated sheet material intersect, thereby bonding these fibers to each other.

The base portions 283 also function to fix the laminated sheet material 280 to the papermaking mat 10. Specifically, the base portions 283 join fibers forming the laminated sheet material 280 to the papermaking mat 10 by fusion bonding.

The base portions 283 may be composed of an organic material.

The organic material constituting the base portions 283 differs from the material of the web fibers. Specifically, the base portions 283 may be formed by thermally fusing hot-melt powder (hot-melt adhesive) to the web fibers.

The organic material constituting the base portions 283 is not limited as long as it can be used as a hot-melt powder. Specific examples thereof include polyethylene (PE), polyethylene terephthalate (PET), polyamide (PA), and ethylene-vinyl acetate copolymer resin (EVA).

In the laminated sheet-equipped papermaking mat 210, the organic component content is preferably 8% by weight or less, more preferably 7% by weight or less.

When the organic component content in the laminated sheet-equipped papermaking mat 210 is 8% by weight or less, even when exhaust gas reaches the exhaust gas conversion apparatus in which the laminated sheet-equipped papermaking mat 210 is disposed and the organic components are decomposed by the heat of the exhaust gas, the amount of gas generated is small. Accordingly, generation of odor associated with the gas generation can be suppressed.

The "organic component content (% by weight) in a laminated sheet-equipped papermaking mat" herein is calculated as follows.

First, a weight W₃ of the laminated sheet-equipped papermaking mat is measured.

Next, the laminated sheet-equipped papermaking mat is heated at 600°C for one hour to decompose the organic components. Then, a weight W₄ of the papermaking mat is measured.

The organic component content (% by weight) in the laminated sheet-equipped papermaking mat is calculated according to the following equation (2): 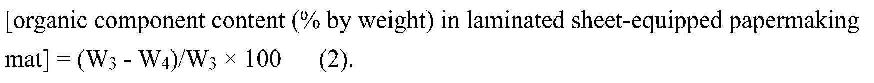 [organic component content (% by weight) in laminated sheet-equipped papermaking mat] = (W3 - W4)/W3 × 100 (2).

The present description describes the following matters.

The present disclosure (1) relates to a papermaking mat including: inorganic fibers, organic fibers, and at least one of an organic binder or an inorganic binder, the papermaking mat having an organic component content of 5% by weight or less.

The present disclosure (2) relates to the papermaking mat according to the present disclosure (1), wherein the papermaking mat has a weight proportion of the organic fibers of 4.5% by weight or less.

The present disclosure (3) relates to the papermaking mat according to the present disclosure (1) or (2), wherein a ratio of an average fiber diameter of the organic fibers to an average fiber diameter of the inorganic fibers ([average fiber diameter of the organic fibers]/[average fiber diameter of the inorganic fibers]) is 0.1 to 1.5.

The present disclosure (4) relates to the papermaking mat according to any one of the present disclosures (1) to (3), wherein the inorganic fibers include one type of fiber or two or more types of fibers.

The present disclosure (5) relates to the papermaking mat according to any one of the present disclosures (1) to (4), wherein the inorganic fibers include at least one selected from the group consisting of alumina fibers, refractory ceramic fibers (RCF), glass fibers, mullite fibers, silica fibers, basalt fibers, and bio-soluble fibers.

The present disclosure (6) relates to the papermaking mat according to any one of the present disclosures (1) to (5), wherein the inorganic fibers include first inorganic fibers having an average fiber diameter of 3.0 to 20.0 µm and second inorganic fibers having an average fiber diameter of 0.1 to 15.0 µm.

The present disclosure (7) relates to the papermaking mat according to any one of the present disclosures (1) to (6), wherein the organic fibers include at least one selected from the group consisting of cellulose fibers, acrylic fibers, aramid fibers, PVA fibers, polyamide fibers, polyester fibers, polyethylene fibers, nylon fibers, polyurethane fibers, polychlal fibers, and polylactic acid fibers.

The present disclosure (8) relates to the papermaking mat according to any one of the present disclosures (1) to (7), wherein the organic fibers each include a main fiber and a plurality of fine fibers that are fibrillated from at least a part of an entire surface of the main fiber.

The present disclosure (9) relates to the papermaking mat according to the present disclosure (8), wherein the organic fibers have an average fiber diameter of 1 to 10 µm.

The present disclosure (10) relates to the papermaking mat according to the present disclosure (8) or (9), wherein the fine fibers have an average fiber diameter of 0.01 to 1 µm.

The present disclosure (11) relates to the papermaking mat according to any one of the present disclosures (1) to (10), wherein the organic binder contains at least one selected from the group consisting of: acrylic resins, acrylate latices, rubber latices, carboxymethyl cellulose, polyvinyl alcohol, styrene resins, and epoxy resins.

The present disclosure (12) relates to the papermaking mat according to any one of the present disclosures (1) to (11), wherein the inorganic binder contains at least one selected from the group consisting of alumina, silica, silicon carbide, zirconia, boron nitride, diamond, and pumice.

The present disclosure (13) relates to the papermaking mat according to any one of the present disclosures (1) to (12), wherein a ratio of a total weight of the organic fibers, the organic binder, and the inorganic binder to a weight of the inorganic fibers (([weight of the organic fibers] + [weight of the organic binder] + [weight of the inorganic binder])/[weight of the inorganic fibers]) is 0.01 to 0.1.

The present disclosure (14) relates to the papermaking mat according to any one of the present disclosures (1) to (13), wherein a ratio of a weight of the organic fibers to a total weight of the organic fibers, the organic binder, and the inorganic binder ([weight of the organic fibers]/([weight of the organic fibers] + [weight of the organic binder] + [weight of the inorganic binder])) is 0.01 to 0.9.

The present disclosure (15) relates to the papermaking mat according to any one of the present disclosures (1) to (14), wherein the papermaking mat has a ratio of T₂ to T₁ (T₂/T₁) of 1.0 to 1.3, where T₁ is a thickness of the papermaking mat and T₂ is a thickness of the papermaking mat after heating at 50°C and 80% humidity for 24 hours.

The present disclosure (16) relates to the papermaking mat according to any one of the present disclosures (1) to (15), which is used as a holding material of an exhaust gas conversion apparatus including a metal casing, an exhaust gas treatment unit housed in the metal casing, and a holding material between the metal casing and the exhaust gas treatment unit.

The present disclosure (17) relates to a laminated sheet-equipped papermaking mat including: the papermaking mat according to any one of the present disclosures (1) to (16); and a laminated sheet material including a plurality of fibers and placed on at least one main surface of the papermaking mat.

The present disclosure (18) relates to the laminated sheet-equipped papermaking mat according to the present disclosure (17), wherein the laminated sheet material is a web-like body including fiber bundles for a laminated sheet material each formed by entangling a plurality of fibers, and single fibers for a laminated sheet material.

The present disclosure (19) relates to the laminated sheet-equipped papermaking mat according to the present disclosure (17) or (18), wherein the laminated sheet-equipped papermaking sheet has an organic component content of 8% by weight or less.

### EXAMPLES

The following describes examples that more specifically disclose the present invention. The present invention is not limited to these examples.

### (Example 1)

### [Fiber opening step]

A bulk composed of alumina-silica fibers having a weight ratio of Al₂O₃:SiO₂ = 72:28 was prepared.

Next, 34.0 g of an aggregate of inorganic fibers was taken from the bulk and placed in 7.0 L of water. Subsequently, fiber opening was performed by stirring using a stirrer (product name: SMT-101, manufacturer: AS ONE Corporation) at a rotation speed of 1000 rpm for a stirring time of 10 minutes, whereby a slurry of inorganic fibers was produced.

### [Organic fiber preparation step]

Cellulose fibers having an average fiber diameter of 10.0 µm were prepared, and the cellulose fibers having a solid content of 2.0 g were placed in a mixer (product name: SJM-M1000P, manufacturer: Ishizaki Electric Mfg. Co., Ltd.) and stirred at 17,000 rpm for 5.0 minutes.

This process provided cellulose fibers each including a main fiber and a plurality of fine fibers that are fibrillated from at least a part of the entire surface of the main fiber.

The average fiber diameter of the fine fibers was 8.3 µm.

### [Papermaking slurry preparation step]

The cellulose fibers having fine fibers formed therein were added to the slurry of inorganic fibers. At this time, the amount of the cellulose fibers was adjusted to 1.0 to 4.0 parts by weight per 100 parts by weight of the inorganic fibers.

An organic binder (product name: LX854E, manufacturer: Nippon Zeon Co., Ltd.) and an inorganic binder (product name: AS-520-A, manufacturer: Nissan Chemical Corporation) were further added to prepare a papermaking slurry. At this time, the amount of the organic binder was adjusted to 1.0 to 4.0 parts by weight and the amount of the inorganic binder to 2.0 parts by weight per 100 parts by weight of the inorganic fibers.

### [Papermaking step]

Next, the papermaking slurry was poured into a molding machine having a mesh for filtering on its bottom to remove the solvent in the slurry, whereby an inorganic fiber aggregate was obtained. Subsequently, the inorganic fiber aggregate was dehydrated and dried at 150°C to 210°C for five minutes to one hour, whereby a papermaking mat according to Example 1 was produced.

### (Example 2)

### [Fiber opening step]

A needle mat composed of alkaline earth silicate fibers, which are bio-soluble fibers, and having a bulk density of 0.17 g/cm³ and a needle mark density of 21 pcs/cm² was prepared.

Next, the needle mat was fired at 800°C for one hour to thermally decompose organic components contained in the needle mat.

Then, the needle mat after firing was allowed to stand until reaching room temperature, and the needle mat was then loosened by hand.

Next, 5.0 g of an aggregate of inorganic fibers was taken from the needle mat and placed in 0.4 L of water. Subsequently, fiber opening was performed by stirring using a stirrer (product name: SMT-101, manufacturer: AS ONE Corporation) at a rotation speed of 1000 rpm for a stirring time of 10 minutes, whereby a slurry of inorganic fibers was produced.

Using the obtained slurry of inorganic fibers, the papermaking mat according to Example 2 was produced by performing [Organic fiber preparation step], [Papermaking slurry preparation step], and [Papermaking step] in the same manner as in Example 1.

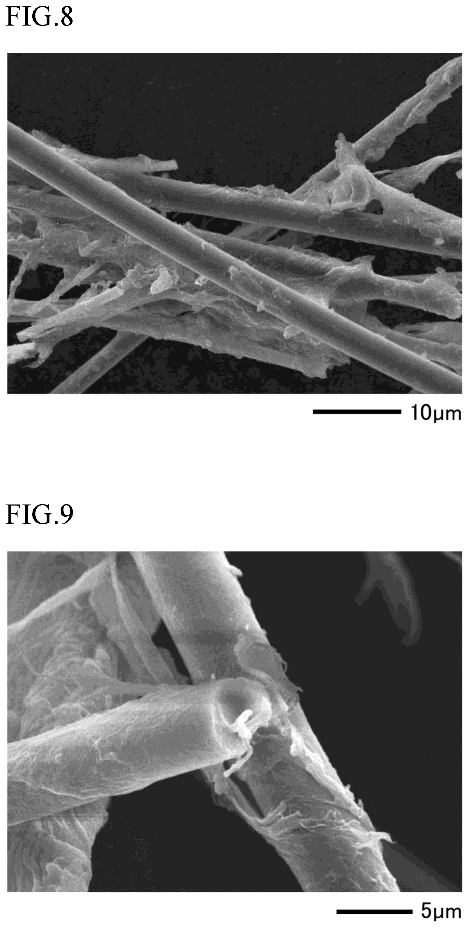

States of inorganic fibers constituting the papermaking mats according to Example 1 and Example 2 were observed using a scanning electron microscope (SEM). Obtained photographs are shown in FIGS. 8 and 9.

FIG. 8 is an enlarged photograph of inorganic fibers constituting the papermaking mat according to Example 1.

FIG. 9 is an enlarged photograph of inorganic fibers constituting the papermaking mat according to Example 2.

As shown in FIGS. 8 and 9, in the papermaking mats according to Example 1 and Example 2, a mixture of organic fibers, an organic binder, and an inorganic binder was present on surfaces of the inorganic fibers, and a mixture of organic fibers, an organic binder, and an inorganic binder was present at intersections of the inorganic fibers.

### (Example 3) to (Example 11) and (Comparative Example 1) and (Comparative Example 2)

Papermaking mats according to Examples 3 to 11 were produced as in Example 1 except that the amount of the organic binder used was adjusted so that the proportion of organic components contained in the papermaking mat became values shown in Table 1.

Papermaking mats according to Comparative Examples 1 and 2 were produced as in Example 1 except that no organic fibers were used and the amount of the organic binder used was adjusted so that the proportion of organic components contained in the papermaking mat became values shown in Table 1.

### (Measurement of organic components)

The weights of the papermaking mats according to the respective examples were measured.

Thereafter, the papermaking mats according to the respective examples were heated at 600°C for 1.0 hours to decompose the organic components, and the weights of the papermaking mats after heating were measured.

Based on the weights of the papermaking mats according to the respective examples before and after heating, the organic component content (% by weight) in the papermaking mat according to each example was calculated. Table 1 shows the results.

**[Table 1]**

| | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|
| Presence or absence of organic fiber | Present | Present | Present | Present | Present | Present | Present | Present | Present | Present | Present | Absent | Absent |
| Organic component content (% by weight) | 5.0% | 3.0% | 5.0% | 3.0% | 3.0% | 2.0% | 4.5% | 5.0% | 4.0% | 2.0% | 4.5% | 10% | 10% |
| Moldability test (T₂/T₁) | 1.1 | 1.3 | 1.3 | 1.2 | 1.2 | 1.1 | 1.2 | 1.1 | 1.0 | 1.3 | 1.0 | 1.1 | 1.1 |
| Fiber diameter ratio (organic fiber/inorganic fiber) | 0.5 | 0.6 | 0.7 | 0.8 | 0.6 | 0.6 | 0.6 | 0.6 | 0.9 | 0.9 | 0.9 | - | - |
| Average fiber diameter (inorganic) | 6.0 | 5.7 | 6.1 | 5.8 | 5.7 | 5.5 | 5.4 | 5.5 | 3.7 | 3.7 | 3.7 | 6.3 | 3.7 |
| Average fiber diameter (organic) | 3.3 | 3.3 | 4.4 | 4.4 | 3.5 | 3.5 | 3.5 | 3.5 | 3.3 | 3.3 | 3.4 | - | - |
| Surface pressure reduction rate (%) | - | 49.4 | - | - | - | 37.4 | - | - | - | - | - | 52.3 | - |

### (Moldability test)

The thickness T₁ of each papermaking mat was measured. Thereafter, each papermaking mat was heated at 50°C and 80% humidity for 24 hours, and the thickness T₂ of each papermaking mat after heating was measured. The ratio of T₂ to T₁ (T₂/T₁) was then calculated. Table 1 shows the results.

As shown in Table 1, the papermaking mat according to each example exhibited a low ratio of T₂ to T₁ (T₂/T₁) and high moldability, although the organic component content was about half that of the papermaking mat according to each comparative example.

### (Measurement of holding force)

Mat materials according to Example 2, Example 6, and Comparative Example 1 were placed between an upper plate and a lower plate of a hot surface pressure measuring apparatus manufactured by MTS and equipped with a heater.

Next, at room temperature, the upper plate was moved at a speed of 25.4 mm/min to compress each mat material until the bulk density reached 0.40 g/cm³, and the surface pressure at that time was measured.

Thereafter, while the mat material was maintained in a compressed state, the upper plate and the lower plate were heated to 600°C at a temperature increase rate of 45°C/min and held for 10 minutes.

The surface pressure reduction rate (%) ((1 - [initial surface pressure of the papermaking mat]/[minimum surface pressure of the papermaking mat during heating]) × 100) was measured.

As shown in Table 1, the papermaking mats according to Examples 2 and 6 exhibited a low surface pressure reduction rate even when heated.

### REFERENCE SIGNS LIST

10 papermaking mat
11 end
11a protrusion
12 end
12a recess
20 inorganic fiber
30 organic fiber
31 main fiber
32 fine fiber
41, 42 mixture
50 fiber bundle
60 metal casing
70 exhaust gas treatment unit
70a exhaust gas inlet-side end
70b exhaust gas discharge-side end
71 cell
72 cell wall
73 plug
100 exhaust gas conversion apparatus
210 laminated sheet-equipped papermaking mat
280 laminated sheet material
281 fiber bundle for laminated sheet material
282 single fiber for laminated sheet material
283 base portion

## Claims

1. A papermaking mat comprising:
inorganic fibers;
organic fibers; and
at least one of an organic binder or an inorganic binder,
the papermaking mat having an organic component content of 5% by weight or less.

2. The papermaking mat according to claim 1,
wherein the papermaking mat has a weight proportion of the organic fibers of 4.5% by weight or less.

3. The papermaking mat according to claim 1,
wherein a ratio of an average fiber diameter of the organic fibers to an average fiber diameter of the inorganic fibers ([average fiber diameter of the organic fibers]/[average fiber diameter of the inorganic fibers]) is 0.1 to 1.5.

4. The papermaking mat according to claim 1,
wherein the inorganic fibers include one type of fiber or two or more types of fibers.

5. The papermaking mat according to claim 1,
wherein the inorganic fibers include at least one selected from the group consisting of alumina fibers, refractory ceramic fibers (RCF), glass fibers, mullite fibers, silica fibers, basalt fibers, and bio-soluble fibers.

6. The papermaking mat according to claim 1,
wherein the inorganic fibers include first inorganic fibers having an average fiber diameter of 3.0 to 20.0 µm and second inorganic fibers having an average fiber diameter of 0.1 to 15.0 µm.

7. The papermaking mat according to claim 1,
wherein the organic fibers include at least one selected from the group consisting of cellulose fibers, acrylic fibers, aramid fibers, PVA fibers, polyamide fibers, polyester fibers, polyethylene fibers, nylon fibers, polyurethane fibers, polychlal fibers, and polylactic acid fibers.

8. The papermaking mat according to claim 1,
wherein the organic fibers each include a main fiber and a plurality of fine fibers that are fibrillated from at least a part of an entire surface of the main fiber.

9. The papermaking mat according to claim 8,
wherein the organic fibers have an average fiber diameter of 1 to 10 µm.

10. The papermaking mat according to claim 8,
wherein the fine fibers have an average fiber diameter of 0.01 to 1 µm.

11. The papermaking mat according to claim 1,
wherein the organic binder contains at least one selected from the group consisting of acrylic resins, acrylate latices, rubber latices, carboxymethyl cellulose, polyvinyl alcohol, styrene resins, and epoxy resins.

12. The papermaking mat according to claim 1,
wherein the inorganic binder contains at least one selected from the group consisting of alumina, silica, silicon carbide, zirconia, boron nitride, diamond, and pumice.

13. The papermaking mat according to claim 1,
wherein a ratio of a total weight of the organic fibers, the organic binder, and the inorganic binder to a weight of the inorganic fibers (([weight of the organic fibers] + [weight of the organic binder] + [weight of the inorganic binder])/[weight of the inorganic fibers]) is 0.01 to 0.1.

14. The papermaking mat according to claim 1,
wherein a ratio of a weight of the organic fibers to a total weight of the organic fibers, the organic binder, and the inorganic binder ([weight of the organic fibers]/([weight of the organic fibers] + [weight of the organic binder] + [weight of the inorganic binder])) is 0.01 to 0.9.

15. The papermaking mat according to claim 1,
wherein the papermaking mat has a ratio of T₂ to T₁ (T₂/T₁) of 1.0 to 1.3, where T₁ is a thickness of the papermaking mat and T₂ is a thickness of the papermaking mat after heating at 50°C and 80% humidity for 24 hours.

16. The papermaking mat according to claim 1, which is used as a holding material of an exhaust gas conversion apparatus including a metal casing, an exhaust gas treatment unit housed in the metal casing, and a holding material between the metal casing and the exhaust gas treatment unit.

17. A laminated sheet-equipped papermaking mat comprising:
the papermaking mat according to any one of claims 1 to 16; and
a laminated sheet material comprising a plurality of fibers and placed on at least one main surface of the papermaking mat.

18. The laminated sheet-equipped papermaking mat according to claim 17,
wherein the laminated sheet material is a web-like body comprising fiber bundles for a laminated sheet material each formed by entangling a plurality of fibers, and single fibers for a laminated sheet material.

19. The laminated sheet-equipped papermaking mat according to claim 17,
wherein the laminated sheet-equipped papermaking mat has an organic component content of 8% by weight or less.
